# FASCICULE DE BREVET EUROPEEN

(11) **EP 4 081 726 B1**
(45) Date de publication et mention de la délivrance du brevet: **03.01.2024**
(21) Numéro de dépôt: 20838573.2
(22) Date de dépôt: 24.12.2020
(51) Int. Cl.: F16L 1/26, F16L 55/17, F16L 59/16

(54) **COUVERTURE D'ISOLATION D'UN ÉLÉMENT IMMERGÉ D'UNE INSTALLATION D'EXPLOITATION DE FLUIDE DANS UNE ÉTENDUE D'EAU, INSTALLATION ET PROCÉDÉ ASSOCIÉ**
ISOLIERABDECKUNG FÜR EIN UNTERWASSERELEMENT EINER EINRICHTUNG ZUR VERWENDUNG VON FLÜSSIGKEIT IN EINEM WASSERABSCHNITT, ZUGEHÖRIGE ANLAGE UND VERFAHREN
INSULATING COVER FOR A SUBMERGED ELEMENT OF A FACILITY FOR USING FLUID IN A STRETCH OF WATER, ASSOCIATED FACILITY AND METHOD

(30) Priorité: 27.12.2019 FR 1915666
(43) Date de publication de la demande: 02.11.2022
(73) Titulaire: TechnipFMC Subsea France, 92400 Courbevoie (FR)
(72) Inventeur: CLEMENT, Isabelle, 91300 MASSY (FR); HENNEUSE, Xavier, 76580 LE TRAIT (FR)
(74) Mandataire: Lavoix
(86) Numéro de dépôt international: PCT/EP2020/087886
(87) Numéro de publication internationale: WO 2021/130376

(56) Documents cités:
- WO-A1-2011/046503
- WO-A2-2008/107542
- FR-A1- 2 605 378

## Description

La présente invention concerne une couverture d'isolation d'un élément immergé d'une installation d'exploitation de fluide dans une étendue d'eau selon le préambule de la revendication 1.

WO2008/107542 décrit une couverture du type précité.

La couverture est destinée à être appliquée par exemple sur une conduite immergée d'une installation d'exploitation d'hydrocarbures.

Les installations de ce type comportent généralement un ensemble de fond destiné à la collecte du fluide, un ensemble de surface, destiné au transfert de fluide vers des navires ou des pipelines et des conduites de transport de fluide entre l'ensemble de surface et l'ensemble de fond.

L'ensemble de surface est par exemple un support naval de surface pouvant être une unité flottante de production, de stockage et de déchargement appelée FPSO (« Floating Production, Storage and Offloading » en langue anglaise) ou une unité flottante dédiée au gaz naturel liquéfié appelée FLNG (« Floating Liquified Natural Gas » en langue anglaise), une plate-forme semi-submersible, pouvant être par exemple un TLP (« Tension Leg Platform » en langue anglaise), une bouée de déchargement, une colonne verticale flottante ou un navire. En variante, l'ensemble de surface est une structure rigide fixe de type « jacket » ou une structure oscillante assujettie au fond de la mer.

La conduite immergée est notamment une conduite rigide ou une conduite flexible. Une conduite flexible est notamment telle que décrite dans les documents normatifs publiés par l'American Petroleum Institute (API), API 17J (3ème édition - 1er janvier 2009) et API RP 17B (3ème édition - mars 2002) ou API 17K (2^{ème} édition - Septembre 2016).

La conduite flexible comprend généralement une gaine interne en polymère, à travers laquelle circule le fluide à transporter, des éléments d'armures enroulés à l'extérieur de la gaine interne et une couche externe, formée d'une gaine en polymère, qui protège les éléments d'armures de l'eau située à l'extérieur de la conduite flexible.

Une conduite rigide comprend généralement au moins un tube métallique interne destiné au transport de fluide, et éventuellement, une couche externe en polymère destinée à isoler thermiquement la conduite.

Lorsque la conduite flexible ou rigide est immergée dans une étendue d'eau, il est important de préserver l'intégrité de la couche externe.

Dans le cas d'une conduite flexible, si la gaine externe se perce, une inondation de l'espace annulaire est susceptible de se produire, pouvant engendrer une corrosion des armures. Ceci peut réduire substantiellement la durée de vie de la conduite flexible.

En ce qui concerne les conduites rigides ou flexibles, si la couche externe est endommagée, un pont thermique se crée. Dans cette zone, un refroidissement local de la conduite peut affecter la circulation de fluide à travers la conduite, en produisant notamment des bouchons d'hydrates ou en augmentant la viscosité du fluide et empêcher son écoulement. De telles bouchons sont difficiles à traiter et conduisent, dans le pire des cas, à des arrêts substantiels de production engendrant des coûts élevés.

L'endommagement de la couche externe peut résulter de causes diverses. Par exemple, lors la mise en place de la conduite, des contacts entre la conduite et les tensionneurs, ou les poulies peuvent engendrer des dégâts.

La couche externe peut également être dégradée par contact avec le fond de l'étendue d'eau lors de l'installation de la conduite, ou même durant la production, notamment en cas de bouclage latéral ou de reptation de la conduite. Elle peut également être dégradée suite à une mauvaise application de la couche externe lors de la fabrication ou encore suite à l'hydrolyse du polymère formant la couche externe.

Lorsque la couche externe d'une conduite est endommagée, il est connu par exemple de WO 2008/107542 de placer autour de la conduite une pince sous-marine au niveau de la partie endommagée.

De telles pinces sont généralement déployées à l'aide de grues, et sont activées sous l'étendue d'eau par des véhicules télécommandés. Elles sont généralement constituées de deux demi-coques rigides définissant une empreinte de forme conjuguée avec la conduite, qui sont assemblées de manière ajustée autour de la partie endommagée de la conduite.

De telles pinces sont adaptées pour des tronçons linéaires de conduite. Cependant, elles ne donnent pas entière satisfaction.

En effet, pour permettre une bonne isolation, les pinces doivent être conçues et réalisées avec une géométrie qui correspond exactement à celle de la partie endommagée de conduite. Ceci retarde leur mise en place, augmente le coût, et nécessite un placement très précis de la pince sur la conduite, notamment au moyen d'une grue et d'un véhicule télécommandé.

De plus, de telles pinces sont peu adaptées pour des géométries complexes de conduite, par exemple au niveau des cols de cygnes. Elles sont en outre difficiles à mettre en place dans des zones encombrées, telle qu'au niveau des collecteurs (« manifold » en anglais), des têtes de puits, ou des équipements terminaux (désignés par le terme anglais « Pipe Line End Termination ou « PLET »).

Un but de l'invention est donc de fournir une couverture d'isolation qui soit simple et peu coûteuse à concevoir et à installer, tout en s'adaptant à une grande variété de configurations d'éléments immergés à protéger.

A cet effet, l'invention a pour objet une couverture d'isolation selon la revendication 1.

La couverture d'isolation selon l'invention peut comprendre l'une ou plusieurs des caractéristiques des revendications 2 à 10, prise(s) isolément ou suivant toute combinaison techniquement possible.

L'invention a également pour objet une installation d'exploitation de fluide à travers une étendue d'eau selon la revendication 11 ou 12.

L'invention a également pour objet un procédé selon la revendication 13.

Le procédé selon l'invention peut comprendre l'une ou plusieurs des caractéristiques des revendications 14 ou 15, prise(s) isolément ou suivant toute combinaison techniquement possible.

L'invention sera mieux comprise à la lecture de la description qui va suivre, donnée uniquement à titre d'exemple, et faite en se référant aux dessins annexés, sur lesquels :
- [Fig. 1] la figure 1 est une vue schématique d'une première installation d'exploitation de fluide dans une étendue d'eau, dans laquelle est mise en place une couverture d'isolation selon l'invention ;
- [Fig. 2] la figure 2 est une vue en perspective en trois-quarts face d'une première couverture d'isolation selon l'invention ;
- [Fig. 3] la figure 3 est une vue schématique illustrant le volume interne d'une couverture d'isolation selon l'invention, lors de sa mise en place autour d'une conduite ;
- [Fig. 4] la figure 4 est une vue analogue à la figure 3, après la mise en place ;
- [Fig. 5] la figure 5 est une vue d'une variante de couverture d'isolation selon l'invention ; et
- [Fig. 6] la figure 6 est une vue analogue à la figure 1 illustrant la mise en place d'une couverture d'isolation selon l'invention sur un élément de conduite d'un collecteur.

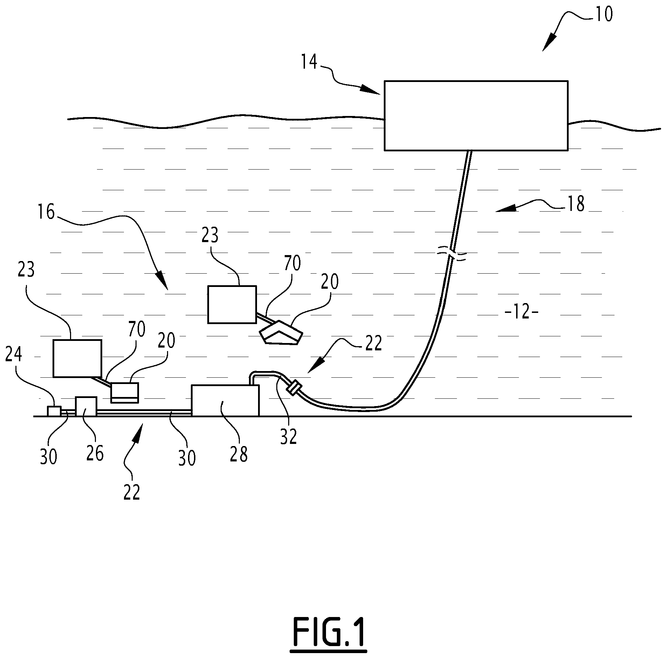

Une installation d'exploitation 10 de fluide dans une étendue d'eau 12 est illustrée sur la figure 1.

L'étendue d'eau 12 est par exemple un lac, une rivière, une mer ou un océan. La profondeur de l'étendue d'eau 12 au droit de l'installation 10 est par exemple comprise entre 50 m et 3 000 m, voire 4 000 m.

L'installation 10 comporte un ensemble de surface 14, situé à la surface de l'étendue d'eau 12 et un ensemble de fond 16 disposé sur le fond de l'étendue d'eau 12. Elle comporte, entre l'ensemble de surface 14 et l'ensemble de fond 16 au moins une conduite montante 18 de transport de fluide (désignée par le terme anglais « riser »).

L'installation 10 comporte en outre au moins une couverture d'isolation 20 selon l'invention, destinée à être placée sur un élément immergé 22 de l'installation 10.

L'installation 10 comprend également un véhicule télécommandé 23 (« Remotely Operated Vehicle » ou « ROV » en anglais) destiné à la mise en place et éventuellement au retrait de la couverture d'isolation 20 sur l'élément immergé 22.

Le fluide produit dans l'installation 10 est par exemple un hydrocarbure, tel que du pétrole et/ou du gaz naturel.

L'ensemble de surface 14 est par exemple flottant. Il est avantageusement formé par un support naval de surface pouvant être une unité flottante de production, de stockage et de déchargement appelée FPSO (« Floating Production, Storage and Offloading » en langue anglaise) ou une unité flottante dédiée au gaz naturel liquéfié appelée FLNG (« Floating Liquified Natural Gas » en langue anglaise), une plate-forme semi-submersible, pouvant être par exemple un TLP (« Tension Leg Platform » en langue anglaise), une bouée de déchargement, une colonne verticale flottante ou un navire. En variante, l'ensemble de surface 14 est une structure rigide fixe de type « jacket » ou une structure oscillante assujettie au fond de la mer.

Dans cet exemple, l'ensemble de fond 16 comporte des têtes de puits 24, au moins un collecteur 28 et/ou une terminaison 26 de conduites, raccordés entre eux par des conduites de production 30 (« flowlines » en anglais), par exemple formées de conduites rigides ou flexibles.

L'ensemble de fond 16 comporte également dans cet exemple un connecteur 32 destiné à raccorder à la conduite de transport 18 au collecteur 28, le connecteur 32 étant ici en forme de col de cygne.

La conduite de transport 18 est ici une conduite flexible telle que définie plus haut. Elle s'étend entre le connecteur 32 de l'ensemble de fond 16 et l'ensemble de surface 14. La conduite de transport 18 est destinée à transporter du fluide depuis l'ensemble de fond 16 vers l'ensemble de surface 14 pour récupérer un fluide de production tel que des hydrocarbures, ou depuis l'ensemble de surface 14 vers l'ensemble de fond 16, dans le cas d'un fluide d'injection.

En variante, la conduite de transport 18 est une conduite rigide ou une tour hybride comportant une conduite rigide et un flexible de raccordement à la surface.

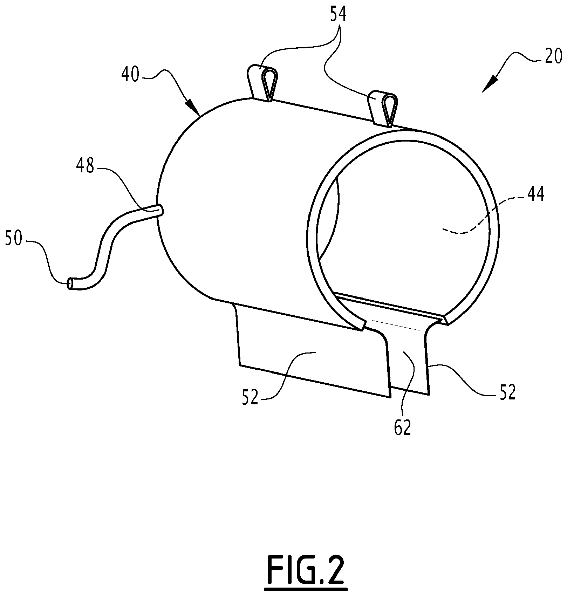

En référence aux figures 2 à 4, la couverture d'isolation 20 comporte une enveloppe déformable 40 délimitant un volume interne creux 44.

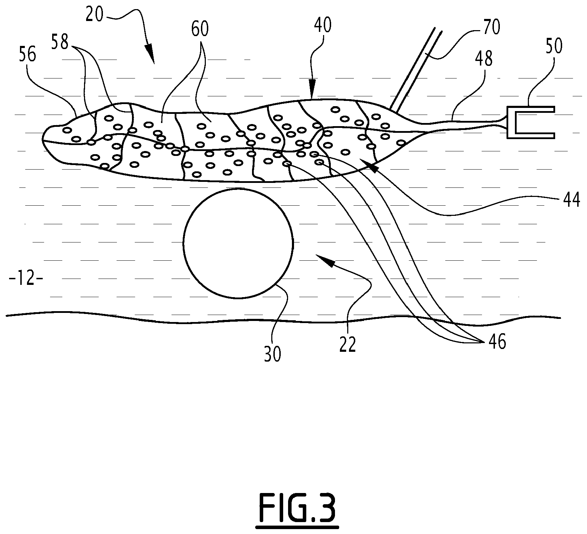

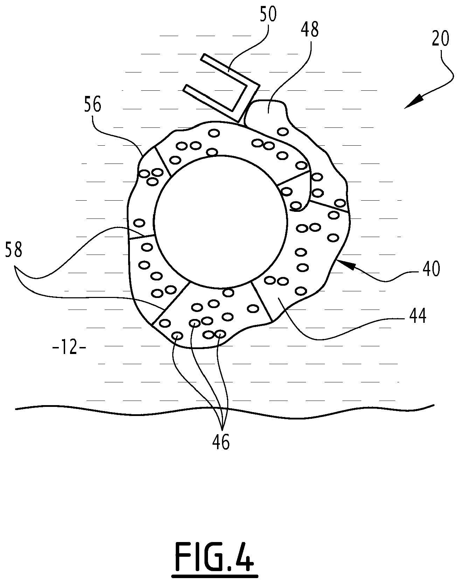

Comme illustré sur les figures 3 et 4, la couverture 20 comporte en outre, dans le volume interne 44, une pluralité d'éléments thermiquement isolants 46. Les éléments isolants 46 sont librement déplaçables les uns par rapport aux autres dans le volume interne 24.

La couverture d'isolation 20 définit en outre une ouverture d'accès 48 au volume interne 44 munie d'une vanne 50 d'accès sélectif au volume interne 44.

Dans l'exemple représenté sur la figure 2, la couverture d'isolation 20 comprend en outre, des flancs pleins 52 faisant saillie de part et d'autre de l'enveloppe déformable 40 et des attaches 54 destinées à être saisies par le véhicule télécommandé 23 pour la mise en place de la couverture d'isolation 20. Les flancs 52 sont de préférence déformables.

L'enveloppe déformable 40 est par exemple réalisée à partir d'une poche 56 en double paroi déformable délimitant intérieurement, entre les parois de la double paroi, le volume interne 44.

Elle par exemple formée en un polymère étanche aux liquides, en particulier étanche à l'eau, notamment en polyoléfine telle que du polypropylène ou du polyéthylène ou/et en caoutchouc ou en matériau textile.

L'enveloppe 40 est par exemple déformable sous l'effet de son propre poids, ou/et par la main d'un utilisateur.

L'épaisseur de chaque paroi de la poche 56 est de préférence inférieure à 6 mm et est notamment comprise entre 1 mm et 4 mm.

L'enveloppe déformable 40 comporte en outre dans le volume interne 44 des parois internes 58. Les parois internes 58 sont par exemple formées par des membranes poreuses aux liquides en particulier à l'eau ou/et par des grillages polymériques.

Les parois internes 58 délimitent entre elles des compartiments 60 distincts au sein du volume interne 44.

Le nombre de compartiments 60 dans le volume interne 44 est supérieur à 2, et est compris notamment entre 2 et 40. Le volume de chaque compartiment dépend de la courbure à obtenir pour s'adapter à la structure immergée. Il est avantageusement inférieur à 10 litres.

Les compartiments distincts 60 sont reliés entre eux fluidiquement et sont reliés fluidiquement à l'ouverture d'accès 48 directement ou à travers d'autres compartiments 60.

Ainsi, chaque compartiment 60 est propre à être inondé par un liquide à pression atmosphérique, par exemple de l'eau, avant son déploiement dans l'étendue d'eau 12, pour chasser l'air de chaque compartiment 60. L'inondation est avantageusement complétée par de l'eau de l'étendue d'eau 12 lors de l'immersion de l'enveloppe déformable 40 dans l'étendue d'eau 12.

L'inondation de chaque compartiment 60 est mise en oeuvre à travers l'ouverture d'accès 48 et éventuellement au moins un autre compartiment 60.

De même, le liquide présent au sein de chaque compartiment 60 est propre à être aspiré depuis l'ouverture d'accès 48 et éventuellement au moins un autre compartiment 60.

Les éléments isolants 46 sont librement déplaçables dans le volume interne 44 les uns par rapport aux autres et par rapport à l'enveloppe 40. Ils sont avantageusement répartis dans les compartiments 60.

Les éléments isolants 46 sont de préférence formés de polymère, par exemple de polyoléfine telle que du polypropylène ou en polyuréthane ou en polymère fluoré tel que du polyfluorure de vinylidène (PVDF) ou en caoutchouc synthétique ou encore en liège.

La conductivité thermique du matériau formant chaque élément isolant est par exemple inférieure à 1,0 W·m⁻¹·K⁻¹, notamment inférieure à 0,7 W·m⁻¹·K⁻¹.

Cette conductivité thermique est par exemple mesurée à 22°C selon la Norme ISO 22007-2.

Les éléments isolants 40 sont par exemple des billes, des cubes ou plus généralement des pièces solides disjointes, dispersées dans le volume interne 44.

Le volume de chaque élément isolant 40 est de préférence inférieur à 50 cm³ et notamment compris entre 4 mm³ et 4 cm³. La densité d'éléments isolants 40 dans le volume interne 44 est par exemple supérieure à 0,7 fois le volume interne 44 après aspiration du liquide.

L'ouverture d'accès 48 est propre à permettre l'inondation du volume interne 44, et en particulier des compartiments distincts 60 du volume interne 44 par un liquide, en particulier un liquide introduit en surface, et/ou de l'eau de l'étendue d'eau 12, notamment lors du déploiement et de la mise en place de la couverture d'isolation 20 sur l'élément immergé 22. Elle est propre à permettre l'aspiration du liquide contenu dans le volume interne 44, une fois la couverture 20 mise en place autour de l'élément immergé 22.

Le volume interne 44 est délimité de manière étanche aux liquides, en particulier étanche à l'eau, par l'enveloppe déformable 40. Il débouche extérieurement exclusivement par la ou par chaque ouverture d'accès 48.

Dans cet exemple, la vanne d'accès 50 est propre à être manipulée par un véhicule télécommandé 23 pour sélectivement fermer et ouvrir l'ouverture d'accès 48.

Elle est configurée pour la connexion d'une tête d'aspiration du véhicule télécommandé 43, la tête d'aspiration étant raccordée à une pompe propre à aspirer le liquide présent dans le volume interne 44.

Dans l'exemple représenté sur la figure 2, l'enveloppe déformable 40 présente une forme sensiblement cylindrique ouverte suivant une fente longitudinale 62 s'étendant le long d'une génératrice. Une telle forme est adaptée à la mise en place sur un tronçon linéaire de conduite, par exemple un tronçon d'une conduite 30 de production formant alors l'élément immergé 22 à protéger.

Dans cet exemple, les flancs pleins 52 font saillie le long des bords de la fente 62, de part et d'autre de la fente 62.

Les attaches 54 sont formées par des boucles fixées sur l'enveloppe déformable 40. Dans l'exemple de la figure 2, les boucles 40 sont fixées à l'opposé de la fente 62.

Les attaches 54 sont propres à être saisies par un bras 70 du véhicule télécommandé 23 pour permettre la mise en place de l'enveloppe déformable 40 autour de l'élément immergé 22 à travers la fente 62.

La mise en place d'une couverture d'isolation 20 selon l'invention sur un élément immergé 22 va maintenant être décrite.

Initialement, la couverture d'isolation 20 est fournie en surface, avantageusement avec son volume interne 44 dépourvu de liquide.

La forme de l'enveloppe déformable 40 peut être standardisée, par exemple cylindrique telle que décrite sur la figure 2, sans être nécessairement conjuguée à la forme de l'élément immergé 22 sur laquelle elle doit être appliquée.

Le volume interne 44 de l'enveloppe déformable 40 est alors inondé avec un liquide, de préférence à la pression atmosphérique, à travers l'ouverture d'accès 48. Le liquide est avantageusement de l'eau.

Le liquide inonde les compartiments 60 et chasse l'air présent dans le volume interne 44.

Puis, l'enveloppe déformable 40 est immergée avec sa vanne d'accès 50 ouverte pour éventuellement compléter l'inondation du volume interne 44 par de l'eau de l'étendue d'eau 12 à travers l'ouverture d'accès 48.

La circulation de liquide entre l'étendue 12 et le volume interne 44 maintient l'équilibre de la pression hydrostatique pendant le déploiement de la couverture d'isolation 20.

La couverture d'isolation 20 est ensuite descendue dans l'étendue d'eau 12, par exemple dans un panier du véhicule télécommandé 23. Elle est facilement manipulable lors de cette descente, puisqu'elle présente une flottabilité équivalente à celle de l'eau.

Puis, comme illustré sur la figure 3, la couverture d'isolation 20 est déployée au-dessus de l'élément immergé 22, ici par exemple une conduite de production 30, et est raccordée par ses attaches 54 aux bras 70 du véhicule télécommandé 23.

Ensuite, l'enveloppe déformable 40 est manipulée pour entourer l'élément immergé 22 au niveau de la zone devant être isolée, comme illustré sur la figure 4.

Une tête d'aspiration raccordée à une pompe d'aspiration présente dans le véhicule télécommandé 23 est alors connectée sur la vanne d'accès 50. Le liquide présent dans le volume interne 44 est pompé par la pompe d'aspiration.

De préférence, plus de 50% en volume, notamment plus de 80% en volume du liquide présent dans le volume interne 44 est pompée hors du volume interne 44 par l'intermédiaire de la pompe présente dans le véhicule télécommandé 23.

L'enveloppe déformable 40 se plaque alors autour de l'élément immergé 22, grâce à la dépression créée dans le volume interne 44.

Par ailleurs, les éléments isolants 46 se concentrent et/ou s'agrègent dans le volume interne 44 pour réaliser une isolation thermique adaptée à la forme de l'élément immergé 22.

L'enveloppe déformable 40 adopte alors la forme de l'élément immergé 22, même si cette forme est complexe, et les éléments isolants 46 se répartissent autour de la zone à protéger de l'élément immergé 22, dans les compartiments distincts 60 du volume interne 44.

Le pompage du liquide présent dans le volume interne 44 limite en outre la convection à travers le liquide à l'intérieur de l'enveloppe déformable 40, puisque le liquide ne peut plus circuler librement dans le volume interne 44.

Par suite, une isolation thermique très efficace est réalisée à la fois par la concentration et/ou l'agrégation des éléments isolants 46 et leur répartition autour de l'élément immergé 22, et par la suppression de la convection à travers le liquide.

Ensuite, le véhicule télécommandé 23 ferme la vanne d'accès 50, ce qui empêche l'entrée d'eau dans le volume interne 40 et maintient l'enveloppe déformable 40 en place.

Le véhicule télécommandé 23 se détache alors de la couverture isolante 20, qui reste en place sur l'élément immergé 22.

Si besoin est, la couverture isolante 20 peut être retirée en faisant descendre à nouveau un véhicule télécommandé 23 dans l'étendue d'eau 12, puis, en ouvrant la vanne d'accès 50 pour inonder à nouveau le volume interne 44 à travers l'ouverture 48. Ceci étant fait, l'enveloppe déformable 40 est détachée de l'élément immergé 22 et est remontée en surface ou replacée sur un autre élément immergé 22.

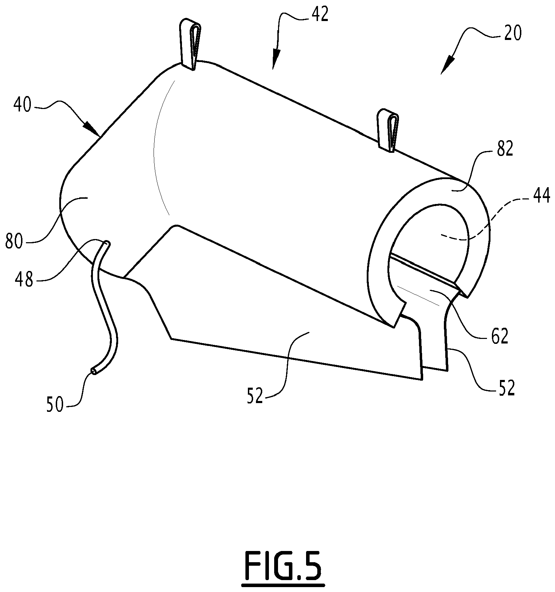

Dans la variante représentée sur la figure 5, l'enveloppe déformable 40 présente un premier tronçon linéaire 80 et une deuxième tronçon linéaire 82 qui forment entre eux un angle supérieur à 90°, notamment compris entre 100° et 140°.

Une fente commune 62 s'étend le long des tronçons 80, 82, dans un même plan ici représenté vertical. La fente 62 est située à l'opposé du sommet de l'angle formé par les tronçons 80, 82.

Les flancs 52 s'étendent le long des bords de la fente 62 et présentent donc une région triangulaire le long des bords de la fente 62.

Cette enveloppe déformable 40 est particulièrement adaptée pour se placer autour d'un connecteur en col de cygne 32 qui forme alors l'élément immergé 22.

La mise en place de la couverture d'isolation 20 représentée sur la figure 5 est par ailleurs analogue à la mise en place de celle représentée sur la figure 2.

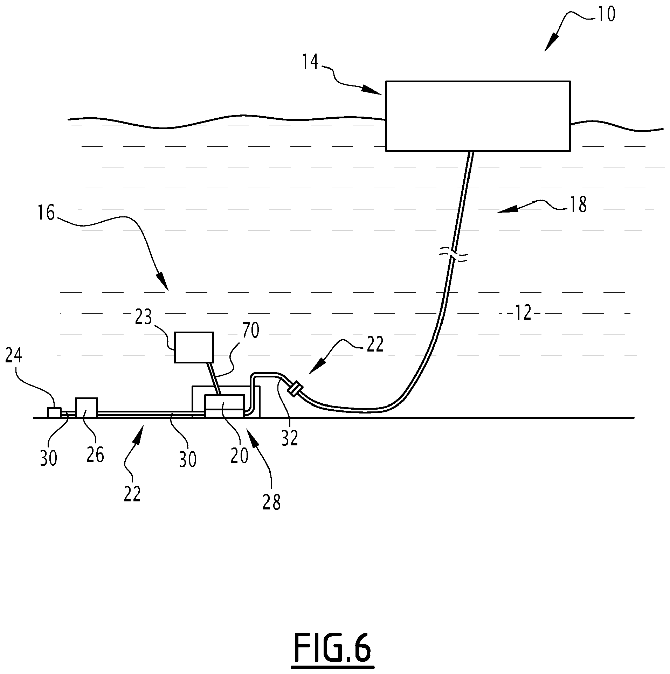

Dans la variante illustrée sur la figure 6, la couverture d'isolation 20 est mise en place sur un élément de conduite présent au sein d'un collecteur 28.

La mise en place de la couverture d'isolation 20 représentée sur la figure 6 est par ailleurs analogue à la mise en place de celle représentée sur la figure 1.

Les couvertures d'isolation 20 selon l'invention sont donc partiellement avantageuses, puisqu'elles s'adaptent à toute géométrie d'élément immergé 22 devant être protégé, sans avoir à prévoir ou à concevoir des formes spécifiques comme dans le cas d'une pince.

Il n'est en outre pas nécessaire de prévoir des tolérances particulières pour s'ajuster à n'importe quelle géométrie d'élément immergé 22, l'enveloppe déformable 40 s'appliquant naturellement sur l'élément immergé 22 lors de l'aspiration du liquide présent dans le volume interne 44.

En outre, la mise en place est simple, et peut s'effectuer dans des espaces confinés ou présentant un accès difficile, par exemple au sein d'un collecteur 28, grâce à la déformabilité élevée de l'enveloppe déformable 40. L'enveloppe déformable 40 est simple à fabriquer, et peut être un produit sur étagère directement disponible pour être mise en place dans une installation 10 d'exploitation de fluide.

La couverture d'isolation 20 selon l'invention est simple à installer, à l'aide d'un simple véhicule télécommandé 23, grâce à sa flottabilité équivalente à celle de l'eau. Ainsi, une telle couverture d'isolation 20 peut être installée dans toute installation 10 munie d'un véhicule télécommandé 23, sans qu'il soit nécessaire de disposer d'une grue. La couverture d'isolation 20 est en outre être facilement transportable à terre ou dans les airs, lorsque le volume interne creux 44 est dépourvu d'eau.

Comme exposé plus haut, la mise en place de la couverture d'isolation 20 est réversible et la couverture d'isolation 20 peut être déplacée à une autre position ou retirée notamment si une réparation est jugée plus urgente.

Les propriétés d'isolation thermique de la couverture d'isolation 20 sont très bonnes, grâce à la limitation de la convection de liquide à travers l'enveloppe déformable 40 lors du pompage du liquide et grâce à l'agrégation des éléments isolants 46 qui en résulte.

L'enveloppe déformable 40 étant élastique, elle peut se dilater légèrement lors de la mise en place de l'enveloppe 40 sans qu'il soit nécessaire de prévoir une ouverture pour l'eau extérieure.

En tout état de cause, la couverture d'isolation 20 est simple à fabriquer et peu coûteuse et peut être rapidement mise en place sur un élément immergé 22 d'une installation 10 d'exploitation de fluide ou retirée de cet élément immergé 22.

## Revendications

1. Couverture d'isolation (20) d'un élément immergé (22) d'une installation (10) d'exploitation de fluide dans une étendue d'eau (12), comportant :
- une enveloppe déformable (40), destinée à être placée autour de l'élément immergé (22) ;
**caractérisée en ce que** l'enveloppe déformable (40) présente un volume interne (44), la couverture (20) comportant :
- une pluralité d'éléments isolants (46) disposés dans le volume interne (44) librement déplaçables les uns par rapport aux autres ;
- au moins une ouverture (48) d'accès sélectif au volume interne (44) à travers l'enveloppe déformable (40), propre à permettre l'inondation du volume interne (44) par un liquide lors du déploiement de la couverture d'isolation (20) vers l'élément immergé (22), et à permettre l'aspiration de liquide contenu dans le volume interne (44) lors de l'application de la couverture d'isolation (20) sur l'élément immergé (22).

2. Couverture (20) selon la revendication 1, dans lequel le volume interne (44) présente une pluralité de compartiments (60) séparés les uns des autres, chaque compartiment (60) contenant une pluralité d'éléments isolants (46).

3. Couverture (20) selon la revendication 2, dans lequel les compartiments (60) sont reliés fluidiquement les uns aux autres.

4. Couverture (20) selon l'une quelconque des revendications précédentes, dans laquelle les éléments isolants (46) sont librement déplaçables par rapport à l'enveloppe déformable (40) dans le volume interne (44).

5. Couverture (20) d'isolation selon l'une quelconque des revendications précédentes, dans lequel les éléments isolants (46) sont formés de polymère, notamment de polyoléfine.

6. Couverture (20) selon l'une quelconque des revendications précédentes, dans lequel les éléments isolants (46) sont des pièces solides disjointes, notamment des billes ou des éléments prismatiques.

7. Couverture (20) selon l'une quelconque des revendications précédentes, dans laquelle l'enveloppe déformable (40) est formée en matériau polymère, notamment en caoutchouc ou/et en polyoléfine.

8. Couverture (20) selon l'une quelconque des revendications précédentes, comportant une vanne d'accès (50) activable par un véhicule télécommandé (43), la vanne d'accès (50) étant propre à obturer sélectivement l'ouverture (48).

9. Couverture (20) selon l'une quelconque des revendications précédentes, comportant au moins un flanc plein (52) prolongeant l'enveloppe déformable (40).

10. Couverture (20) selon l'une quelconque des revendications précédentes, comportant au moins une attache (54) solidaire de l'enveloppe déformable (40), l'attache (54) étant propre à être saisie par un véhicule télécommandé (43).

11. Installation (10) d'exploitation de fluide à travers une étendue d'eau (12) comportant :
- un élément immergé (22) ;
- une couverture (20) selon l'une quelconque des revendications précédentes, appliquée sur l'élément immergé (22).

12. Installation (10) selon la revendication 11, dans laquelle l'élément immergé (22) est une conduite ou un connecteur.

13. Procédé d'isolation d'un élément d'une installation (10) d'exploitation de fluide immergée dans une étendue d'eau (12) comprenant les étapes suivantes :
- fourniture d'une couverture (20) selon l'une quelconque des revendications 1 à 10;
- inondation du volume interne (44) par un liquide à travers l'ouverture d'accès (48)
- application de l'enveloppe déformable (40) sur l'élément immergé (22) ;
- aspiration de liquide contenu dans le volume interne (44) à travers l'ouverture d'accès (48) ;
- fermeture de l'ouverture d'accès (48) et maintien de l'enveloppe déformable (40) appliquée sur l'élément immergé (22).

14. Procédé selon la revendication 13, dans lequel les étapes d'application et d'aspiration sont réalisées par un véhicule télécommandé (23).

15. Procédé selon l'une quelconque des revendications 13 ou 14, comportant une étape d'inondation additionnelle du volume interne (44) après l'aspiration de liquide contenu dans le volume interne (44), et de déplacement de l'enveloppe déformable (40) à l'écart de l'élément immergé (22).

## Patentansprüche

1. Isolierabdeckung (20) für ein Unterwasserelement (22) einer Anlage (10) zur Nutzung von Fluid in einem Gewässer (12), aufweisend:
- eine verformbare Hülle (40), die dazu bestimmt ist, um das Unterwasserelement (22) herum angeordnet zu sein;
**dadurch gekennzeichnet, dass** die verformbare Hülle (40) ein Innenvolumen (44) aufweist, wobei die Abdeckung (20) aufweist:
- eine Vielzahl von Isolierelementen (46), die in dem Innenvolumen (44) frei gegeneinander verschiebbar angeordnet sind;
- mindestens eine Öffnung (48) für den selektiven Zugang zu dem Innenvolumen (44) durch die verformbare Hülle (40), die geeignet ist, das Fluten des Innenvolumens (44) mit einer Flüssigkeit beim Bereitstellen der Isolierabdeckung (20) in Richtung des Unterwasserelements (22) zu ermöglichen und das Absaugen von in dem Innenvolumen (44) enthaltener Flüssigkeit beim Anbringen der Isolierabdeckung (20) an dem Unterwasserelement (22) zu ermöglichen.

2. Abdeckung (20) nach Anspruch 1, wobei das Innenvolumen (44) eine Vielzahl von voneinander getrennten Abteilen (60) aufweist, wobei jedes Abteil (60) eine Vielzahl von Isolierelementen (46) enthält.

3. Abdeckung (20) nach Anspruch 2, wobei die Abteile (60) fluidisch miteinander verbunden sind.

4. Abdeckung (20) nach einem der vorhergehenden Ansprüche, wobei die Isolierelemente (46) in Bezug auf die verformbare Hülle (40) in dem Innenvolumen (44) frei beweglich sind.

5. Isolierabdeckung (20) nach einem der vorhergehenden Ansprüche, wobei die Isolierelemente (46) aus Polymer, insbesondere aus Polyolefin, gebildet sind.

6. Abdeckung (20) nach einem der vorhergehenden Ansprüche, wobei die Isolierelemente (46) lose feste Teile, insbesondere Kugeln oder prismatische Elemente, sind.

7. Abdeckung (20) nach einem der vorhergehenden Ansprüche, wobei die verformbare Hülle (40) aus einem Polymermaterial, insbesondere aus Gummi oder/und aus Polyolefin, gebildet ist.

8. Abdeckung (20) nach einem der vorhergehenden Ansprüche, aufweisend ein Zugangsventil (50), das von einem ferngesteuerten Fahrzeug (43) aktivierbar ist, wobei das Zugangsventil (50) geeignet ist, die Öffnung (48) selektiv zu verschließen.

9. Abdeckung (20) nach einem der vorhergehenden Ansprüche, aufweisend mindestens eine massive Flanke (52), die die verformbare Hülle (40) verlängert.

10. Abdeckung (20) nach einem der vorhergehenden Ansprüche, aufweisend mindestens eine Befestigung (54), die mit der verformbaren Hülle (40) fest verbunden ist, wobei die Befestigung (54) geeignet ist, von einem ferngesteuerten Fahrzeug (43) ergriffen zu werden.

11. Anlage (10) zur Nutzung von Fluid durch ein Gewässer (12), umfassend:
- ein Unterwasserelement (22);
- eine Abdeckung (20) nach einem der vorhergehenden Ansprüche, die auf dem Unterwasserelement (22) angebracht wird.

12. Anlage (10) nach Anspruch 11, wobei das Unterwasserelement (22) eine Leitung oder ein Verbindungsstück ist.

13. Verfahren zur Isolierung eines Elements einer Anlage (10) zur Nutzung von
Fluid, die in ein Gewässer (12) eingetaucht ist, umfassend die folgenden Schritte:
- Bereitstellen einer Abdeckung (20) nach einem der Ansprüche 1 bis 10;
- Fluten des Innenvolumens (44) mit einer Flüssigkeit durch die Zugangsöffnung (48);
- Anlegen der verformbaren Hülle (40) an das Unterwasserelement (22);
- Absaugen von Flüssigkeit, die in dem Innenvolumen (44) enthalten ist, durch die Zugangsöffnung (48);
- Schließen der Zugangsöffnung (48) und Halten der verformbaren Hülle (40) angelegt an dem Unterwasserelement (22).

14. Verfahren nach Anspruch 13, wobei die Schritte des Anlegens und Absaugens von einem ferngesteuerten Fahrzeug (23) durchgeführt werden.

15. Verfahren nach einem der Ansprüche 13 oder 14, aufweisend einen Schritt des zusätzlichen Flutens des Innenvolumens (44) nach dem Absaugen von Flüssigkeit, die in dem Innenvolumen (44) enthalten ist, und des Bewegens der verformbaren Hülle (40) weg von dem Unterwasserelement (22).

## Claims

1. Insulating cover (20) for a submerged element (22) of a fluid exploitation facility (10) in a body of water (12), comprising:
- a deformable jacket (40), intended to be placed around the submerged element (22); **characterized in that** the deformable jacket (40) has an internal volume (44), the cover (20) comprising:
- a plurality of insulating elements (46) arranged in the internal volume (44), able to move freely relative to one another;
- at least one opening (48) for selective access to the internal volume (44) through the deformable jacket (40), for allowing the internal volume (44) to be flooded by a liquid during the deployment of the insulating cover (20) towards the submerged element (22), and for allowing suction of the liquid contained in the internal volume (44) during the application of the insulating cover (20) on the submerged element (22).

2. Cover (20) according to claim 1, wherein the internal volume (44) has a plurality of compartments (60) separated from one another, each compartment (60) containing a plurality of insulating elements (46).

3. Cover (20) according to claim 2, wherein the compartments (60) are fluidly connected to one another.

4. Cover (20) according to any of the preceding claims, wherein the insulating elements (46) are able to move freely relative to the deformable jacket (40) in the internal volume (44).

5. Insulating cover (20) according to any of the preceding claims, wherein the insulating elements (46) are formed of polymer, particularly polyolefin.

6. Cover (20) according to any of the preceding claims, wherein the insulating elements (46) are disjointed solid parts, in particular balls or prismatic elements.

7. Cover (20) according to any of the preceding claims, wherein the deformable jacket (40) is formed of polymeric material, in particular of rubber or/and polyolefin.

8. Cover (20) according to any of the preceding claims, comprising an access valve (50) configured to be activated by a remotely operated vehicle (43), the access valve (50) being suitable for selectively closing the opening (48).

9. Cover (20) according to any of the preceding claims, comprising at least one solid flank (52) extending the deformable jacket (40).

10. Cover (20) according to any of the preceding claims, comprising at least one fastener (54) integral with the deformable jacket (40), the fastener (54) being suitable for being grasped by a remotely operated vehicle (43).

11. Fluid exploitation facility (10) through a body of water (12), comprising:
- a submerged element (22) ;
- a cover (20) according to any of the preceding claims, applied on the submerged element (22).

12. Facility (10) according to claim 11, wherein the submerged element (22) is a pipe or a connector.

13. Method for insulating an element of a fluid exploitation facility (10) submerged in a body of water (12), comprising the following steps:
- providing a cover (20) according to any of claims 1 to 10;
- flooding the internal volume (44) with a liquid through the access opening (48); and
- applying the deformable jacket (40) on the submerged element (22);
- suctioning liquid from the internal volume (44) through the access opening (48);
- closing the access opening (48) and keeping the deformable jacket (40) applied on the submerged element (22).

14. Method according to claim 13, wherein the applying and suctioning steps are performed by a remotely operated vehicle (23).

15. Method according to either claim 13 or claim 14, comprising a step of additional flooding of the internal volume (44) after the suctioning of liquid contained in the internal volume (44), and of moving the deformable jacket (40) away from the submerged element (22).
